Europäisches Patentamt

(19) European Patent Office

Office européen des brevets

(11) Numéro de publication: **0 191 256**
**B1**

(12) **FASCICULE DE BREVET EUROPEEN**

(45) Date de publication du fascicule du brevet: **20.06.90**

(51) Int. Cl.⁵: **C 08 K 3/04, H 01 B 1/24**

(21) Numéro de dépôt: **85402502.0**

(22) Date de dépôt: **16.12.85**

(54) Procédé de fabrication d'un matériau thermoplastique conducteur de l'électricité.

(30) Priorité: **18.12.84 FR 8419359**

(43) Date de publication de la demande:
**20.08.86 Bulletin 86/34**

(45) Mention de la délivrance du brevet:
**20.06.90 Bulletin 90/25**

(84) Etats contractants désignés:
**DE FR GB**

(56) Documents cités:
**EP-A-0 016 662**
**EP-A-0 123 540**
**FR-A-2 273 843**

(73) Titulaire: **OCCIDENTAL CHEMICAL CORPORATION**
**Riverpark 800 Connecticut Avenue**
**Norwalk Connecticut 06850 (US)**

(72) Inventeur: **Delphin, René**
**1 Allée des Glycines**
**F-92260 Fontenay Aux Roses (FR)**
Inventeur: **Regnaut, Bernard**
**13 rue Julien Perrin Escalier A4**
**F-91260 Antony (FR)**

(74) Mandataire: **Weinmiller, Jürgen et al**
**Lennéstrasse 9 Postfach 24**
**D-8133 Feldafing (DE)**

Courier Press, Leamington Spa, England.

# EP 0 191 256 B1

**Description**

La présente invention concerne procédé de fabrication d'un matériau thermoplastique très conducteur de l'électricité, utilisable, par exemple, dans les joints conducteurs, dans les éléments bipolaires de piles à combustible et dans d'autres dispositifs électrochimiques.

Un tel matériau doit présenter simultanément plusieurs caractéristiques:

— une résistivité électrique aussi faible que possible comprise, par exemple, entre quelques ohms. centimètre et quelques dixièmes d'ohms. centimètre;

— une bonne homogénéité de composition et de caractéristiques, notamment électriques et mécaniques;

— une absence d'additifs nuisibles aux catalyseurs éventuellement employés dans les dispositifs électrochimiques concernés;

— une inertie chimique suffisante vis-à-vis des fluides pouvant circuler dans ces dispositifs électrochimiques, aux températures de travail utilisées;

— un prix de revient très bas;

— une aptitude à la mise en oeuvre industrielle économique par des opérations d'extrusion, calandrage, thermocompression, injection, etc. en veu d'obtenir en grandes séries des pièces ayant la forme générale de plaques minces de grande surface: épaisseurs voisines du millimètre; surface de plusieurs décimètres carrés pouvant atteindre le mètre carré;

— des caractéristiques mécaniques telles que les plaques ainsi réalisées avec ce matériau ne soient pas fragiles mais possèdent une résistance à la flexion, à froid et à chaud, compatible avec les méthodes d'assemblage des dispositifs électrochimiques ou autres dont elles peuvent constituer des éléments;

— une étanchéité suffisante aux gaz et aux liquides pour les épaissuers de pièces indiquées ci-dessus;

— une stabilité des caractéristiques dans le temps compatible avec les utilisations envisagées.

En ce qui concern la résistivité, il est possible d'obtenir un matériau satisfaisant en incorporant au matériau thermoplastique des charges métalliques; mais le coût d'un tel matériau est très élevé et en outre les charges métalliques peuvent ne pas être chimiquement inertes vis-à-vis du milieu environnant. Il est donc plus avantageux pour ces raisons de mettre en oevre des charges carbonées, beaucoup moins coûteuses, et dont la réactivité est généralement beaucoup plus fabile.

De nombreux matériaux thermoplastiques conducteurs de l'électricité contenant des charges carbonées ont déjà été réalisés et, parfois, commercialisés comme en témoignent les articles suivants:

— Electrical Conduction Mechanism in carbon filled polymers (IEEE Transactions May/June 1971; pages 913 à 916);

— Modern Plastics International: March 1976; pages 45 à 47;

— JEE; Novembre 1978 pages 42 à 45;

— Modern Plastics International: August 1983; pages 38 à 40;

— Research and Development: May 1984; pages 118 à 123;

— Adhesives Age: June 1984; pages 17 à 20.

Aucun des produits décrits dans ces articles ne présente l'ensemble des caractéristiques précitées.

Le tableau I ci-après résume les résistivités électriques des produits comerciaux actuellement connus ainsi que quelques renseignements concernant leur fabrication, le taux de charge carbonée, et l'indice de viscosité à chaud (Melt Flow Index) qui consitionne leur mise en oeuvre économique pour réaliser des pièces minces de grande surface.

<u>TABLEAU I</u>

| REFERENCE | PROCEDE type de machine | RESISTIVITE ($\Omega$ cm) | CONCENTRATION (%) | MELT INDEX (g/10 mn) |
|---|---|---|---|---|
| DARLING Co | mélangeur ouvert | 25,4 | 64 | |
| DARLING Co | " " | 7,6 | 70 | |
| DARLING Co | " " | 5,1 | 76 | |
| Esso Research | | 57 | 39 (1) | |
| Esso Research | | 17 | 32 (1) | |
| L N P | | 5 à 20 | 40 (2) | |
| UNIROYAL (TPR) | | 150 | | |
| CAPREZ | | 9,3 | 30 | 14,4 à 230° sous 21,6 Kg |
| CAPREZ CP | | 6 | | 4,5 à 230° sous 21,6 Kg |
| ABBEY 100 | | 8 | 45 | |
| DUPONT DE NEMOURS (NDX4769) | | 30 | | |
| TECKNIT 860 | | 10 | | |
| TECKNIT 861 | | 5 | | |
| CABELEC | | 0,7 | 50 | |
| CABELEC | | 0,9 | 47 | |

(1) : Noir de carbone Vulcan XC72

(2) : Fibres de carbone

On constate que les faibles résistivités électriques obtenues par les méthodes classiques (mélangeur ouvert ou mélangeur interne de type Banbury) le sont au prix d'un taux de charge carbonée très élevé.

Les produits ainsi obtenus ne sont pas utilisables pour l'injection économique de pièces minces de grande surface du fait de leur fluidité à chaud insuffisante ou de la fragilité des objets obtenus.

Le brevet américain no 4.124.747 décrit par ailleurs un procédé discontinu consistant à mélanger dans un malaxeur préchauffé de type Banbury un mélange d'un copolymère thermoplastique de propylène-éthylène et de carbone finement divisé, la proportion de carbone étant de l'ordre de 30% en poids.

Le préchauffage est de l'ordre de 100°; le malaxage est effectué pendant une durée de l'ordre de 3 à 5 minutes.

Le matériau thermoplastique ainsi obtenu peut être extrudé sous forme de feuilles dont l'épaisseur est comprise entre 150 µm (microns) et 500 µm (microns) et dont la résistivité est de l'ordre de quelques ohms-centimètre. Mais sa mise en oeuvre par injection en vue d'obtenir des pièces minces et de grande surface est pratiquement impossible pour les raisons déjà indiquées ci-dessus.

Par ailleurs, la Demanderesse a réalisé un certain nombre d'essais en vue de tenter d'améliorer cette situation, en utilisant des mélangeurs ouverts ou fermés (de type Banbury) ainsi que par mélange préalable des deux constituants à l'état de poudre dans un mélangeur ultra-rapide, suivi d'une plastification de ce mélange dans une boudineuse. Les principaux résultats de ces essais sont résumés ci-dessous dans le Tableau II.

## TABLEAU II

| REFERENCE | PROCEDE type de machine | RESISTIVITE en $\Omega$cm | CONCENTRATION en % | MELT INDEX en g/10 mn |
|---|---|---|---|---|
| ESSAI n° 1 | Mélangeur ouvert | 0,85 | 47 | |
| ESSAI n° 2 | Mélangeur ouvert | 0,87 | 47 | |
| ESSAI n° 3 | Banbury | 0,43 | 47 | 0 à 230° sous 21 kg |
| ESSAI n° 4 | Banbury | 0,80 | 47 | |
| ESSAI n° 5 | Banbury | 1 | 47 | 1 à 230° sous 21,6 kg |

En conclusion, il semble que les différents procédé utilisés jusqu'ici ne permettent pas de réaliser un matériau suffisamment conducteur de l'électricité sans recourir à des concentrations de carbone qui entraînent un indice de fluidité à chaud beaucoup trop bas pour permettre l'injection de pièces minces de grande surface.

La présente invention a pour but de mettre en oeuvre un procédé pour réaliser un matériau thermoplastique conducteur qui présente une résistivité encore inférieur à celle des matériaux précédents, c'est-à-dire de l'ordre de quelques dizièmes d'ohm-cm, et dont la fluidtié à chaud soit suffisante pour que l'on puisse lui faire subir industriellement le opérations précitées, afin d'obtenir des feuilles conductrices très minces et peu fragiles.

## EP 0 191 256 B1

La présente invention a pour objet un procédé de fabrication continu d'un matériau thermoplastique, comprenant un mélange de résine thermoplastique et de charges carbonées, caractérisé par le fait que l'on met en oeuvre un malaxeur à double vis, la longueur de la vis étant supérieure à vingt fois son diamètre, que l'on introduit en continu ladite résine thermoplastique dans une première zone de ladite double vis où elle subit un compactage et un préchauffage, que ladite résine passe ensuite dans une seconde zone de ladite double vis où elle subit un malaxage et une plastification, que l'on introduit en continu des charges carbonées particulaires, dans une proportion de 30% à 50%, en poids, au niveau d'une troisième zone de la double vis pour la dispersion desdites charges, la vitesse de rotation de la double vis étant comprise entre 150 et 250 tours par minute, la température desdites zones étant située entre 165°C et 300°C, ledit mélange étant ensuite récupéré à la sortie d'un tête d'extrusion.

La proportion de charges carbonées est de préférence comprise entre 35% et 45% en poids.

Selon un perfectionnement au procédé, on introduit, soit en même temps que les charges carbonées particulaires, soit à un autre moment, des charges carbonées fibreuses dans un proportion inférieure à 10% en poids.

Avantageusement on met en oeuvre une double vis comportant une quatrième zone faisant suite à ladite troisième zone et destinée à réaliser un dégazage dudit mélange à une pression comprise entre la pression atmosphérique et quelques millibars.

De manière tout à fait inattendue, on obtient un produit dont les caractéristiques électriques et mécaniques sont tout à fait remarquables lorsque le charge carbonée est un charge particulaire; la résistivité électrique est d'un ordre de grandeur inférieure à celle obtenue pour un matériau de même composition réalisé par le méthodes classiques, tandis que les caractéristiques mécaniques des plaques minces de grande surface qu'il permet d'obtenir, par injection, par exemple, sont nettement supérieures.

De manière tout aussi inattendue, la conductivité électrique du matériaus ci-dessus se trouve encore multipliée de plusieurs fois sa valeur, si la charge carbonée particulaire est additionnée de quelques pour cent d'une charge carbonée fibreuse.

La résine thermoplastique est un compolymère d'éthylène et de propylène et les charges carbonees sont des noirs de carbone de types variés. Ces charges carbonées, doivent être très conductrices et d'un prix de revient aussi bas que possible tout en étant faciles à incorporer dans la résine. Plus leur densité est faible, plus leur dispersion est bonne, mais plus l'incorporation se révèle délicate. Des compromis sont à choisir entre un taux de charge faible avec un noir très divisé et un taux de charge plus élevé avec un noir plus dense mais plus facile à incorporer.

Les résultats précités sont obtenus plus aisément si l'alimentation en continu en résine thermoplastique et en charges carbonées est effectuée par al'intermédiaire de doseurs gravimétriques garantissant une variation du dosage inférieure ou égale à ± 1% de la valeur de consigne.

D'autres caractéristiques et avantages de la présente invention apparaîtront au cours de la description suivante d'un exemple de mise en oeuvre du procédé selon l'invention.

Dans le dessin annexé:

— la figure 1 est un vue tout à fait schématique d'un dispositif pour la mise en oeuvre du procédé selon l'invention.

— la figure 2 montre le variation de la résistivité P ($\Omega$ cm) en fonction de la concentration C% en noir de carbone, pour un matériau fabriqué selon la procédé de l'art antérieur (courbe A) et pour un matériau fabriquée selon la procédé de l'invention (courbe B).

— la figure 3 reprend à l'échelle agrandie la courbe B de la figure 2 ainsi qu'une courbe (D) montrant les variations de l'indice de fluidité du matériau obtenu par le procédé selon l'invention en fonction de la concentration C% en noir de carbone.

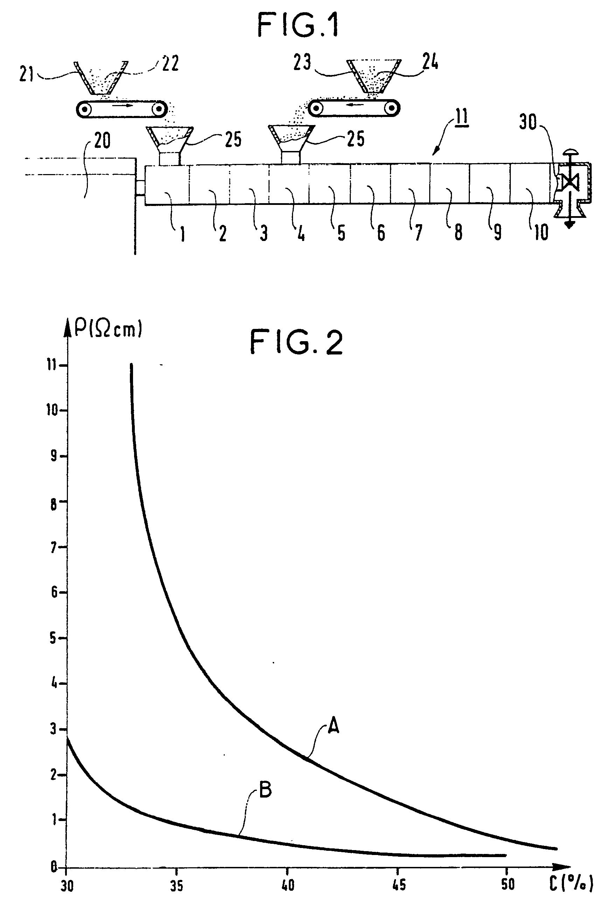

On a illustré très schematiquement dans la figure 1 un malaxeur 11 permettant la fabrication du matériau selon l'invention. Il s'agit d'un malaxeur à double vis de type de ceux vendus sous la marque WERNER und PFLEIDERER, la longueur de la double vis étant supérieure à vingt fois son diamètre. A titre d'exemple les malaxeurs vendus sous la référence ZSK 30 et ZSK 57 ont respectivement un diamètre de 30 mm et 57 mm.

La double vis est entourée de fourreaux, référencés de 1 à 10 dans la figure, et qui sont régulés comme on va le voir plus loin à des températures comprises entre 165°C et 300°C. La double vis est actionnée par un moteur schématiquement représenté par la boîte 20 et sa vitesse de rotation est comprise entre 150 tours par minute et 250 tours par minute.

Un copolymère de propylène et d'éthylène 22 dosé avec une précision de ± 1% dans un doseur gravimétrique 21 est introduit par un dispositif 25 dans la première zone de la double vis entourée par le fourreau 1; à ce niveau la résine est compactée et préchauffée, mais il faut éviter toute gélification. Au niveau des fourreaux 2 et 3, la double vis réalise un malaxage et une plastification de la résine, le fourreau 2 étant régulé à 220°C et le fourreau 3 à 295°C. Au niveau du fourreau 4, également régulé à 295°C, on introduit des charges carbonées de type noir de carbone 24. Ces charges ont été préalablement dosées avec grande précision dans un doseur gravimétrique 23. Il se produit alors l'incorporation du noir de carbone 24 est sa dispersion dans la résine.

La constance et la précision du taux de charge conductrice sont essentiels pour la constance de la conductivité et de l'indice de fluidité à chaud qui constituent les caractéristiques principales du produit, compte-tenu de sa fonction et de sa mise en oeuvre par injection rapide qui nécessite une matière première

5

de caractéristiques très constantes.

Comme déjà mentionné, aucune des autres techniques de fabrication de mélanges conducteurs ne permet d'obtenir simultanément une très bonne dispersion de la charge, une concentration constante et donce une conductibilité aussi élevée et uniforme, ainsi qu'un indice de fluidité à chaud satisfaisant et constant compatibles avec le mises en oeuvre et les applications envisagées.

Le malaxage et la dispersion se poursuivent dans la double vis au niveau des forreaux 5 à 10, le fourreau 5 étant régulé à 295°C, les fourreaux 6 à 10 à 200°C. Un dégazage du mélange est prévu au niveau du fourreau 9, par exemple sous 55 mBars.

Le mélange obtenu passe à travers une tête d'extrusion 30 régulée à une température de l'ordre de 250°C. L'extruson s'effectue à travers une filliére de dix trous présentant un diamètre de quelques millimètres chacun, le matériau à la sortie de la fillère se trouvant à une température de l'ordre de 270°C. Les joncs ainsi formés passent dans un bac d'eau et sont introduits dans un granulateur.

On peut obtenir par exemple un débit de matériau de l'ordre de 55 Kg/heure lorsque la double vis tourne à 250 tours/minute.

La figure 2 montre les caractéristiques électriques tout à fait surprenantes du matériau obtenu par le procédé selon l'invention, vis-à-vis de celles des produits vendus dans le commerce et de celles du matériau obtenu par le procédé discontinu BANBURY de l'art antérieur. Les produits de base du mélange sont les mêmes dans les deux cas. Le noir de carbone est le noir VULCAN XC 72 de marque CABOT. La courbe A montre les valeurs de résistivité pour le matériau de l'art et la courbe B celles du matériau selon l'invention. Ainsi, pour une concentration en noir de carbone d'environ 35%, la résistivité du mélange de l'art antérieur est de 6 $\Omega$cm, alors que celle du mélange selon l'invention est seulement 0,85 $\Omega$cm. On pourrait obtenir un mélange de l'art antérieur présentant une résistivité du même ordre de grandeur, mais ceci nécessiterait une concentration en noir de carbone de l'ordre de 50%. Un tel mélange aurait une viscosité telle qu'il serait inutilisable en injection. De plus les plaques minces réalisables par thermocompression avec un tel matériau seraient d'une très grande fragilité.

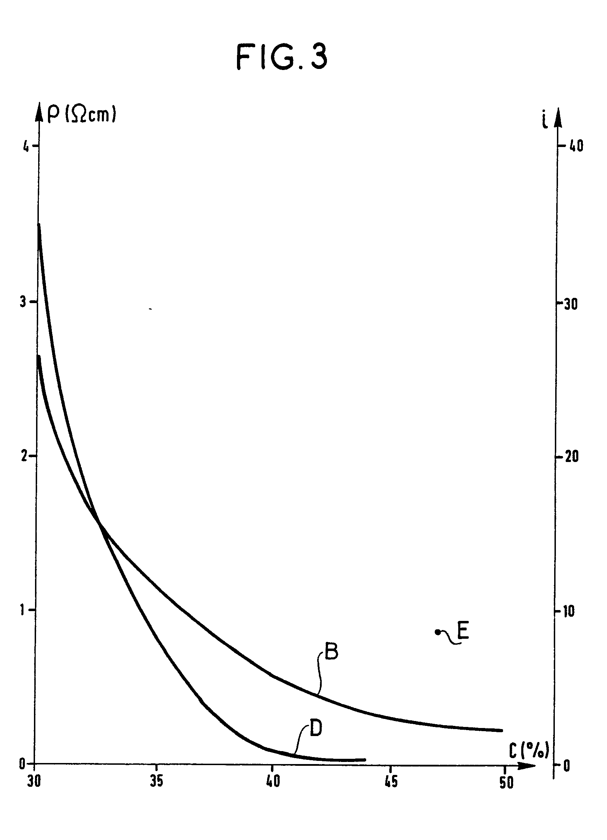

Si on se reporte à la figure 3, on retrouve la courbe B de la figure 2 à l'échelle agrandie, mais aussi la courbe D de l'indice de fluidité (i) en fonction de la concentration C(%) en noir de carbone.

Le point E représente la résistivité du mélange de l'art antérieur pour une concentration déjà très élevée de 47% de carbone dont l'indice de visocisté à chaud est, par ailleurs, incompatible avec l'injection de pièces conductrices minces de grande surface.

On peut remplacer le noir de carbone Vulcan par d'autres charges carbonées particulaires. Ainsi, le Ketjen black de marque AKZO a permis d'obtenir, par le même procédé, avec un taux de charge de 25%, la même résistivité que le Vulcan au taux de 38%.

Les résultants tout à fait surprenants obtenus grâce à la mise en oeuvre du procédé selon l'invention permettent de réaliser par injection des produits du type élément bipolaire pour pile à combustible sur des machines de grande production.

En plus de leur grande conductibilité, ces éléments présentent de nombreuses autres qualités notamment:
— la dureté: 60 à 70 Shore
— la souplesse: un élément de 1,5 mm d'épaisseur peut être fléchi sans dommage en arc de cercle de 150 mm de diamètre.
— la résistance à la traction: ledit élément peut subir une contrainte maximale de 2,5 da N/mm$^2$ à 3,5 da N/mm$^2$ pour un allongement de 4,0% à 7,5%.
— l'inertie thermique et l'interti chimique.

Selon un perfectionnement au procédé selon l'invention on a ajouté au mélange précédemment décrit contenant déjà 38% de noir VULCAN XC 72, des charges carbonées fibreuses dans un rapport de poids de 3% à 9%. On a observé de manière surprenante une multiplication de la conductivité électrique par un facteur allant de 3 à 6.

Bien entendu, l'invention n'est pas limitée au mode de réalisation qui a été décrit, notamment en ce qui concerne le type de malaxeur double vis, les températures de régulation des différents fourreaux, la nature de la résine thermoplastique et celle des charges carbonées.

**Revendications**

1. Procédé de fabrication d'un matériau thermoplastique bon conducteur d'électricité comprenant un mélange de résine thermoplastique et de charges carbonées, caractérisé par le fait que l'on met en oeuvre un malaxeur à double vis, la longueur de la vis étant supérieure à vingt fois son diamètre, que l'on introduit en continu ladite résine thermoplastique, qui est un copolymère de propylène et d'éthylène, dans une première zone de ladite double vis où elle subit un compactage et un préchauffage, que ladite résine passe ensuite dans une seconde zone de ladite double vis où elle subit un malaxage et une plastification, que l'on introduit en continu des charges carbonées particulaires, qui sont un noir de carbone dans une proportion de 35% à 45% en poids, au niveau d'une troisième zone de la double vis pour la dispersion desdites charges, la vitesse de rotation de la double vis étant comprise entre 150 et 250 tours par minute, la température desdites zones étant située entre 165°C et 300°C, ledit mélange étant ensuite récupéré à la sortie d'une tête d'extrusion.

6

# EP 0 191 256 B1

2. Procédé selon la revendication 1, caractérisé par le fait que l'on introduit dans ledit mélange, au niveau d'une desdites zones, des charges carbonées fibreuses dans une proportion inférieure à 10% en poids.

3. Procédé de fabrication selon la revendication 1, caractérisé par le fait que l'on met en oeuvre une double vis comportant une quatrième zone faisant suite à ladite troisième zone et destinée à réaliser un dégazage dudit mélange à une pression comprise entre la pression atmosphérique et quelques millibars.

4. Procédé de fabrication selon l'une des revendications 1 à 3, caractérisé par le fait que l'alimentation en continue en résine thermoplastique et en charges carbonées est effectuée par l'intermédiaire de doseurs gravimétriques garantissant une précision inférieure ou égale à ± 1%.

**Patentansprüche**

1. Verfahren zur Herstellung eines elektrisch gut leitenden thermoplastischen Materials, mit einer Mischung aus thermoplastischem Harz und kohlenstoffhaltigen Füllstoffen, dadurch gekennzeichnet, daß ein Mischer mit Doppelschnecke eingesetzt wird, wobei die Länge der Schnecke zwanzig mal größer als ihr Durchmesser ist, daß das thermoplastische Harz, bei dem es sich um ein Kopolymer von Propylen und Äthylen handelt, kontinuierlich in eine erste Zone der Doppelschnecke eingegeben wird, wo es vorverdichtet und vorerwärmt wird, daß das Harz anschließend in eine zweite Zone der Doppelschnecke geleitet wird, wo es geknetet und plastiziert wird, daß kontinuierlich aus Ruß bestehende kohlenstoffhaltige Füllstoffpartikel mit einem Gewichtsanteil von 35% bis 45% in eine dritte Zone der Doppelschnecke zu deren Vermengung eingebracht werden, wobei die Umdrehungsgeschwindigkeit der Doppelschnecke zwischen 150 und 250 Umdrehungen pro Minute und die Temperatur in den genannten Zonen zwischen 165°C und 300°C beträgt und die Mischung anschließend am Auslaß eines Extrudierkopfes entnommen wird.

2. Verfahren nach Anspruch 1, dadurch gekennzeichnet, daß in einer der Zonen faserige konlenstoffhaltige Füllstoffe mit einem Gewichtsanteil unter 10% eingebracht werden.

3. Herstellungsverfahren nach Anspurch 1, dadurch gekennzeichnet, daß ein Mischer mit Doppelschnecke eingesetzt wird, der eine vierte Zone besitzt, die sich an die dritte Zone anschließt und dazu dient, eine Entgasung der Mischung bei einem Druck zwischen dem atmosphärischen Druck und einigen Millibar durchzuführen.

4. Herstellungsverfahren nach einem der Ansprüch 1 bis 3, dadurch gekennzeichnet, daß die kontinuierliche Versorgung mit thermoplastischen Harz und kohlenstoffhaltigen Füllstoffen mit Hilfe gravimetrischer Dosierer erfolgt, die eine Genauigkeit von ± 1% oder niedriger garantieren.

**Claims**

1. A process for manufacturing a thermoplastic material of a high electrical conductivity, comprising a mixture of thermoplastic resin and a carbon fill, characterized in that a double-screw mixer is used, the screw length being more than twenty times the screw diameter, that the thermoplastic resin, which is a copolymer of propylene and ethylene, is continuously introduced into a first zone of said double-screw mixer where it is compacted and preheated, that the resin is then passed into a second zone of said double-screw mixer where it is kneaded and plastified, that a particulate carbon fill which is carbon black, is continuously introduced at a rate of between 35 and 45% by weight into a third zone of said double-screw mixer for being dispersed therein, the speed of rotation of said two-screw mixer ranging between 150 and 250 rpm, the temperature of said zones ranging between 165°C and 300°C, and said mixture then being removed via the outlet from an extrusion head.

2. A manufacturing process according to claim 1, characterized in that carbon fill fibers of less than 10% by weight are fed into the mixture at one of said zones.

3. A manfuacturing process according to claim 1, characterized in that a double-screw mixer is used which includes a fourth zone following said third zone and intended to degas said mixture at a pressure ranging between atmospheric pressure and a few millibars.

4. A manufacturing process according to any one of the claims 1 to 3, characterized in that the thermoplastic resin and the carbon fill are continuously supplied by means of weighing dispensers warranting a precision of ± 1% or less.

7

1/2

FIG.1

FIG.2

# FIG.3